# EUROPEAN PATENT SPECIFICATION

(11) **EP 3 153 355 B1**
(45) Date of publication and mention of the grant of the patent: **05.12.2018**
(21) Application number: 15188333.7
(22) Date of filing: 05.10.2015
(51) Int. Cl.: B60R 9/058, B60P 7/08

(54) **FIXATION DEVICE**
BEFESTIGUNGSVORRICHTUNG
DISPOSITIF DE FIXATION

(43) Date of publication of application: 12.04.2017
(73) Proprietor: Thule Sweden AB, 330 33 Hillerstorp (SE)
(72) Inventor: FERMAN, Magnus, 33154 Värnamo (SE)
(74) Representative: Wallentin, Lars

(56) References cited:
- EP-A1- 0 325 876
- DE-A1- 10 349 704
- DE-A1-102004 026 773
- US-A1- 2004 134 950

## Description

### FIELD OF THE INVENTION

The present invention relates to a vehicle comprising a fixation device for fixing a load carrier foot on the vehicle. Furthermore, the present invention relates to a fixation bracket for fixing a load carrier foot on a vehicle as well as to them vehicle comprising such a fixation device and a fixation bracket. Moreover, the present invention relates to a method for manufacturing a fixation device.

### BACKROUND OF THE INVENTION

Nowadays, car manufacturers struggle with the reduction of manufacturing costs while providing as many options as possible for end-users. In the field of load carriers, this is a cumbersome task. As many end-users do not intend to use load carriers on the vehicles, from an economic perspective, it is best for the car manufacturers to reduce the effort for providing suitable means for mounting load carriers. The car manufacturers basically developed two possibilities for providing suitable means for mounting load carriers including the provision of roof rails or suitable mounting means provided in the roof channels of the vehicle. Furthermore, the car manufacturers meanwhile offer cars which do not have a designated option for mounting a load carrier. While the above-mentioned means for mounting load carriers still involve a high manufacturing effort, not providing any suitable mounting means has the drawback that the user needs special solutions for fixing a load carrier on the vehicle.

As an example of prior art fix-point systems, reference is made to DE 10 009 789 A1 and DE 10 2009 051 561 A1. However, these systems have the drawback that bolts are required to be secured from inside the vehicle body and thus such systems require the manufacturers to provide complete fix point systems including fix-point brackets. EP 0 325 876 A1 discloses a vehicle with a fixation device adapted to fix a load carrier foot on the vehicle.

### SUMMARY

Against the above background, it is the object of the present invention to provide a cost efficient system allowing the fixation of a load carrier on a vehicle.

The above object is solved by a vehicle comprising a fixation device adapted to fix a load carrier foot on the vehicle. The fixation device comprises one or more threadless engagement members integrally formed with a vehicle body of the vehicle wherein each threadless engagement member forms a threadless engaging element of a form fit coupling adapted to provide a form fit and releasable mating engagement with a mating member of the form fit coupling and wherein the one or more threadless engaging elements are formed by sheet metal clinching.

Accordingly, a threadless engagement member is used in the fixation device according to the invention meaning that a connection with the mating member can be established without a threading action. In other words, the threadless engagement member does not comprise a threaded portion. This construction has the benefit, that the threadless engagement member and the mating member can be coupled with little effort thereby enhancing the usability.

As described above, the one or more threadless engagement members are integrally formed with a vehicle body of the vehicle including the formation of the threadless engaging element by forming a material of the vehicle.

Accordingly, it is possible to cost-efficiently prepare a fix-point system during the manufacture of the vehicle, to which further elements can be easily attached by end-users having a need for a roof carrier. In this connection, it is to be noted that the present invention relates to the fix-point attachment principle and relieves car manufacturers from providing a complete fix-point system on all vehicles. The threadless engaging elements prepare a fix-point system which can be completed with further elements, e.g. a fix-point bracket. In this way, the car manufacturers can save significant effort during the manufacturing because there is no need to install complete fix-point systems on all vehicles. The users of the vehicles can then complete the fix-point system by attaching further elements, e.g. fix-point brackets, to the threadless engaging members.

Advantageously, at least one of the one or more threadless engagement members comprises a protrusion or an intrusion integrally formed with the vehicle body. Accordingly, the elements of the form fit coupling provided on the vehicle can be protrusions or intrusions or combinations thereof. By providing protrusions or intrusions on the vehicle, cost-efficient threadless engagement members are provided.

Preferably, the protrusion or intrusion is integrally formed in the material of the vehicle body. For example, it is possible to form or mold the protrusion or intrusion in a material of the vehicle. By this, the costs for providing protrusions or intrusions are reduced.

According to a preferable embodiment, at least one of the one or more threadless engagement members comprises a protrusion, wherein the protrusion comprises a recess adapted to the shape of the mating member adapted to provide an engagement with the mating member. Preferably, the recess is circumferentially formed. Furthermore, as an alternative or in addition, the protrusion can comprise an undercut formed on an outer circumferential surface thereof. By providing a protrusion with a recess or an undercut, an easy and cost-efficient coupling solution is provided.

At least one of the one or more threadless engagement members can be a sheet metal clinch, which is preferably formed in a metal sheet of the vehicle body. It turned out that it is a cost-efficient and easy way to provide sheet metal clinches as threadless engagement members since such sheet metal clinches can be provided by cold-forming already existing metal sheets off the vehicle using a special punch and die to form the threadless engagement members.

At least a portion of one of the one or more threadless engagement members can be formed in the shape of an inverse truncated cone. It became apparent that such a shape of the threadless engagement member provides for a secure fixation with a corresponding mating member while being easy to manufacture.

The vehicle preferably comprises a roof channel and the fixation device can be arranged in the roof channel. In other words, roof channels of vehicles are suitable spaces for arranging a fixation device. In this connection, the fixation device can be arranged in the bottom of the roof channel.

In an advantageous embodiment, the fixation device is arranged on a body shell of the vehicle, wherein the vehicle preferably comprises a cover element for covering the fixation device. Accordingly, there is no need for a roof channel on the vehicle.

Furthermore, the at least one of the one or more threadless engagement members comprises an intrusion, wherein the intrusion comprises an elongate groove having an insertion section and an engagement section, wherein the engagement section has a smaller dimension than the insertion section. For example at least the engagement section can comprise a dovetail groove allowing an easy insertion of the mating member while restricting any movement of the mating member in other directions than the insertion direction. By using such an elongate groove, an easy coupling is achieved as a corresponding mating member can be easily inserted into the insertion section and then be moved into the engagement section for a secure engagement between the mating member and the elongate groove. Accordingly, an easy mounting process is achieved.

Preferably, at least one of the one or more threadless engagement members comprises an intrusion, wherein the intrusion is a recess having an insertion opening and an engagement section, wherein the insertion opening has a smaller dimension than the engagement section and wherein preferably the engagement section is reinforced and preferably comprises a mushroom-like shape. Accordingly, the threadless engagement members can comprise a simple shape. For example, it is possible to shape the threadless engagement members such that at least a portion of an interior volume of an intrusion comprises the shape of a solid of revolution obtained by rotating a plane curve about a straight axis. The axis can be arranged substantially perpendicular to the surface of the vehicle body.

According to a further aspect of the present invention, a fixation bracket for fixing a load carrier foot on a vehicle as described above is provided.

The fixation bracket comprises at least one engaging portion adapted to be engaged with an intrusion or a protrusion of a fixation device of the vehicle. Furthermore, the fixation bracket comprises a coupling portion adapted to receive a fixation member of a load carrier foot, wherein the engaging portion can comprise a mating member of a form fit coupling. Accordingly, the fixation bracket is an interface part between one or more threadless engagement members and a load carrier foot of a load carrier system.

In order to be adapted to be engaged with an intrusion or a protrusion of the fixation device, the engaging portion can be formed so as to directly engage with an intrusion or a protrusion or can comprise or cooperate with a further element for fixedly coupling the engaging portion to a threadless engaging member. In other words, the engaging portion can be adapted to directly or indirectly engage with one or more threadless engagement members.

In order to receive a fixation member of a load carrier foot, the coupling portion can comprise an opening into which the fixation member of a load carrier foot can be inserted and rotated by 90 degrees in order to couple the load carrier foot to the fixation bracket. Furthermore, the coupling portion can comprise an elongate fixation opening adapted to the shape of an end portion of the fixation member of a load carrier foot allowing to pass the end portion through the elongate opening when the end portion and the elongate opening are substantially aligned and preventing a passing of the end portion through the elongate opening when the end portion and the elongate opening are not aligned. Accordingly, a simple and reliable structure for receiving a fixation member of a load carrier foot is achieved.

As described above, the engaging portion can comprise a mating member of a form fit coupling. In other words, a further element can be used for coupling the bracket to a threadless engagement member. Such a further element can be specifically designed to securely grab a protrusion or to securely engage with an intrusion.

In an advantageous embodiment, the engaging portion comprises a locking mechanism. The locking mechanism can comprise a rotatable member movable between a first position for releasably receiving the protrusion and a second position in which the protrusion is locked to the rotatable member. Accordingly, the rotatable member can form a mating member of the form fit coupling. Such a locking mechanism provides an enhanced usability for the end user.

Preferably, the engaging portion comprises a threaded bore and the rotatable member is threadedly inserted in the threaded bore. Accordingly, rotating the rotatable member causes a linear movement of the rotatable member with respect to the fixation bracket. By this, the rotatable member can be moved with respect to the fixation bracket such that the fixation bracket surrounds different sections of the rotatable member and the rotatable member can have a construction which allows for an engagement with a protrusion in case the fixation bracket surrounds the first section of the rotatable member and to prevent an engagement with or disengagement from the protrusion in case that fixation bracket surrounds a second section of the rotatable member.

According to an embodiment, the rotatable member preferably comprises an opening for at least partly accommodating the protrusion therein, wherein the opening is adapted to be selectively set to a first condition in which the opening comprises a variable dimension and a second condition in which the dimension of the opening is substantially fixed. In order to provide a variable dimension of the opening, the rotatable member can comprise slits extending in the rotatable member from the opening in a direction substantially parallel to a rotational axis of the rotatable member.

Preferably, the opening is in the first condition when the rotatable member is in the first position for allowing to snap the rotatable member on the protrusion and wherein the opening is in the second condition when the rotatable member is in the second position thereby providing a secure engagement between the rotatable member and the protrusion.

According to a further aspect of the present invention, a vehicle as described above comprising a fixation device and an above described fixation bracket is disclosed.

Furthermore, another aspect of the present invention resides in a load carrier foot of a load carrier comprising a fixation structure for fixing the load carrier foot on a vehicle as described above wherein the fixation structure comprises at least one engaging portion adapted to engage with a protrusion or an intrusion of a fixation device of the vehicle. Accordingly, suitable means for coupling the load carrier foot directly to a threadless engagement member without using a fixation bracket can be provided on the load carrier foot. In other words, the features as described above with respect to the engaging portion of the fixation bracket can be directly realized in the load carrier foot. In this case, the load carrier foot can comprise such an engaging portion integrally formed therein.

According to a further aspect of the present invention, a method for manufacturing a fixation device for fixing a load carrier foot on a vehicle is disclosed. The method comprises the step of integrally forming a threadless engagement member in a vehicle body by sheet metal clinching, preferably by sheet metal clinching of two overlapping metal sheets, wherein the threadless engagement member forms a threadless engaging element of a form fit coupling adapted to provide a form fit and releasable mating engagement with a mating member of the form fit coupling. Preferably, the threadless engagement member is formed in a shape as described above with respect to the fixation device of the vehicle.

### BRIEF DESCRIPTION OF THE DRAWINGS

- Figure 1: shows a perspective view of a fixation device according to a first embodiment of the present invention;
- Figure 2: shows a cross-sectional view of a threadless engagement member according to the first embodiment of the present invention;
- Figure 3: shows a perspective view of a fixation bracket mounted on a fixation device according to the first embodiment of the present invention;
- Figure 4: shows a perspective view of the fixation bracket shown in Fig. 3;
- Figure 5: shows a perspective view of a mating member used for fixing the fixation bracket;
- Figures 6 to 9: show the mounting process of a fixation bracket to the fixation device according to the first embodiment of the present invention;
- Figure 10: shows a perspective view of a further fixation bracket mounted on a fixation device according to the first embodiment of the present invention;
- Figure 11: shows a more detailed perspective view of the fixation bracket as shown in Fig. 10;
- Figure 12: shows a perspective view of a mating member used in connection with the fixation bracket as shown in Figs. 10 and 11;
- Figure 13: shows a perspective view of a fixation device according to a second embodiment of the present invention;
- Figure 14: shows a perspective view of a mating member usable with the fixation device as shown in Fig. 13;
- Figures 15 to 19: show the mounting process of a fixation bracket mounted on a fixation device according to the second embodiment of the present invention;
- Figures 20 to 23: show the mounting process of a mating member on a fixation device according to a third embodiment of the present invention;
- Figure 24: shows a perspective view of a mating member as used in connection with the fixation device according to the third embodiment of the present invention;
- Figure 25: shows a cross-sectional view of the fixation device according to the third embodiment of the present invention; and
- Figure 26: shows a cross-sectional view of a mating member inserted in the fixation device as shown in Fig. 25.

### DESCRIPTION OF THE EMBODIMENTS

In the following, embodiments of the present invention will be described with reference to the drawings. It is to be noted that similar elements in the drawings are denoted with the same reference signs.

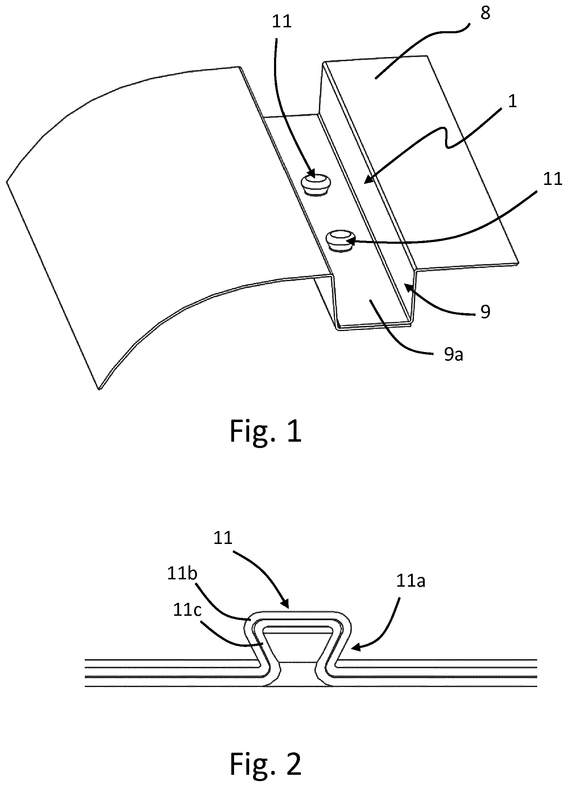

Fig. 1 shows a fixation device 1 according to a first embodiment of the present invention. The fixation device 1 is provided on a bottom portion 9a of a roof channel 9 provided in a vehicle body 8 and comprises two threadless engagement members in the form of protrusions 11.

The construction of the protrusion 11 is shown in Fig. 2 in greater detail. As is shown in Fig. 2, the protrusion 11 is provided by plastically deforming a first metal sheet 11b and a second metal sheet 11c arranged above each other such that a portion of the latter metal sheets protrudes from one side of the metal sheet, that is in the upward direction in Fig. 2, and comprises the shape of an inverse truncated cone. By this, the protrusion 11 comprises an undercut 11a allowing a corresponding mating member to engage with the protrusion 11. A suitable mating member for such an engagement will be described later.

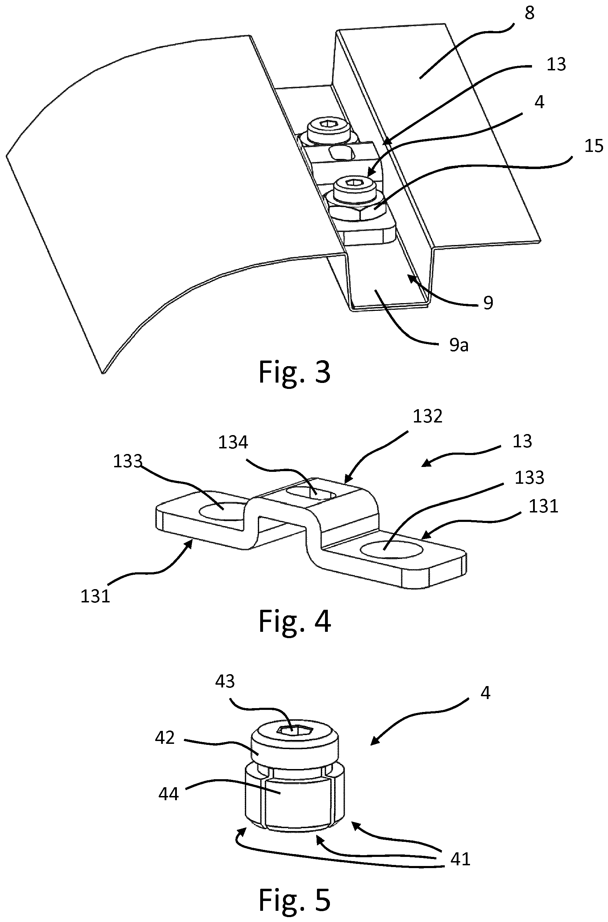

Fig. 3 shows an embodiment of a fixation bracket 13 mounted on the fixation device 1 according to the first embodiment of the present invention. As shown in Fig. 3, the fixation bracket 13 is fixedly mounted on the bottom portion 9a of the roof channel 9 by means of nuts 15 screwed on an attachment element 4 which corresponds to a mating member according to the present invention.

Fig. 4 shows the construction of the fixation bracket 13 in greater detail. The fixation bracket 13 comprises two engaging portions 131 as well as a coupling portion 132 provided between the engaging portions 131. The engaging portions 131 comprise openings 133 each of which being formed so as to allow an insertion of an attachment element 4. The coupling portion comprises an elongate fixation opening 134 which is adapted to the shape of an end portion of a fixation member of a load carrier foot allowing to pass the end portion through the elongate fixation opening 134 when the end portion and the elongate fixation opening 134 are substantially aligned and preventing a passing of the end portion through the elongates fixation opening 134 when the end portion and the elongate fixation opening 134 are not aligned.

The attachment element 4 is shown in Fig. 5 in greater detail. As is shown, the attachment element 4 comprises a head portion 42 and legs 41 protruding from the head portion 42 and being separated from each other by suitable spaces allowing the legs 41 to independently move towards and away from each other. On its lower end, the attachment element 4 comprises an opening (not shown) which due to the above construction of the legs 41 is a variable opening. Also, the attachment element 4 comprises an interior space having a shape mating with the shape of a protrusion 11. On its upper end, the attachment element 4 comprises a hexagonal recess for an engagement of a hex key. Furthermore, a threaded section 44 is provided on the outer side of each of the legs 41.

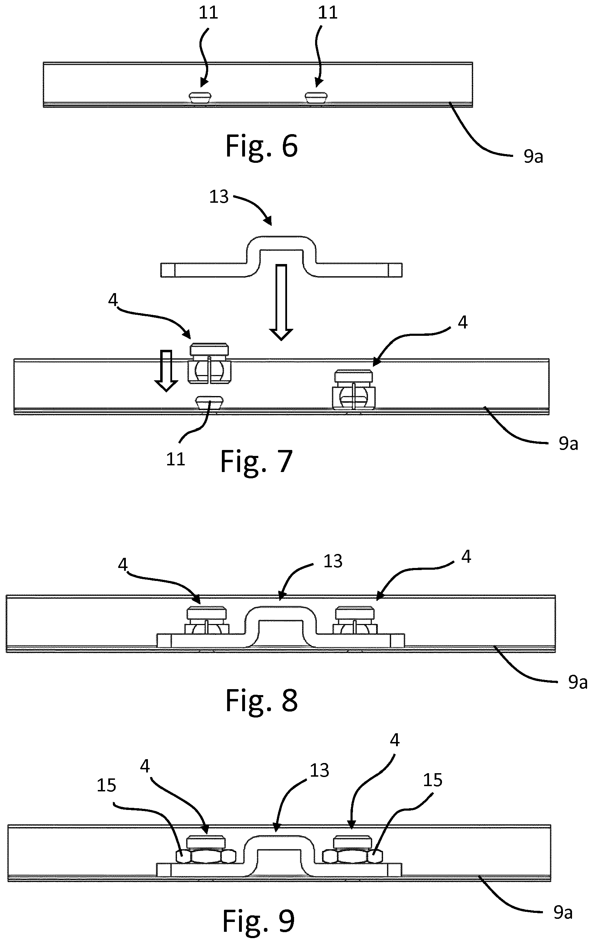

The mounting process of the fixation bracket 13 will be described with reference to Figs. 6 to 9 in the following. Fig. 6 shows a side view of two protrusions 11 serving as a fixation device according to the present invention. As can be gathered from Fig. 7, two attachment elements 4 are pressed on the protrusions 11 which leads to a widening of the opening on the lower portion of the attachment element 4 since the protrusions push the lower portions of the legs 41 away from each other in a direction substantially perpendicular to the movement direction of the attachment elements 4. By this, the attachment elements 4 are snapped on the protrusions 11. After that, as is shown in Fig. 8, the fixation bracket 13 is provided such that the upper ends of the attachment elements 4 are passed through the openings 133 and protrude from the engaging portions 131 on the upper sides. In other words, the fixation bracket 13 is located at a position restricting any movement of the legs 41 away from each other thereby securing the attachment elements 4 on the protrusions. In order to finally fix the fixation bracket 13 on the vehicle, nuts 15 are screwed on the attachment elements 4 as shown in Fig. 9. Accordingly, a fix-point to which a load carrier foot can be mounted is provided.

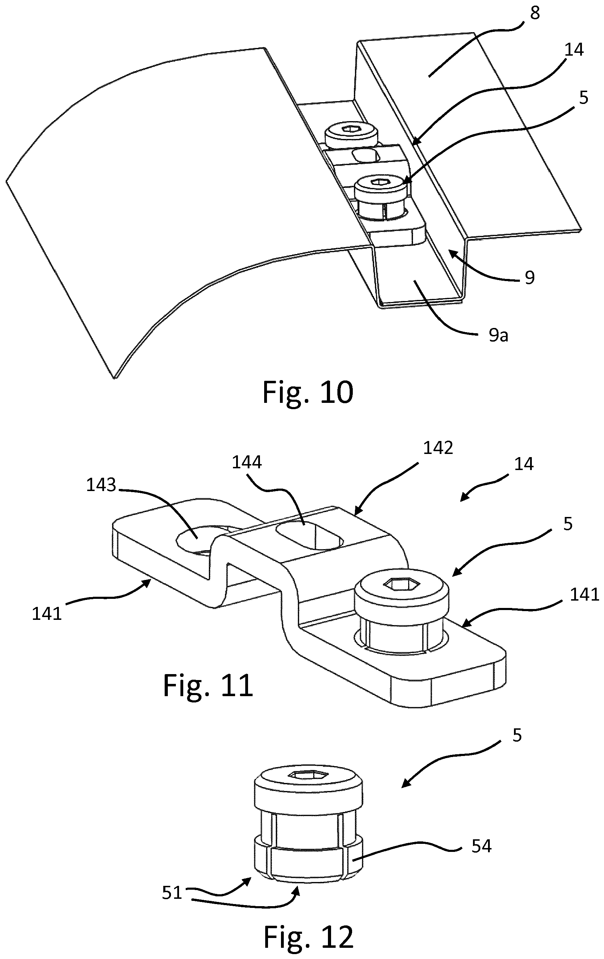

A slight modification of the fixation bracket as well as the attachment elements as described before is explained in the following with reference to Figs. 10 to 12. As is shown in Fig. 10, a fixation bracket 14 and attachment elements 5 are used.

As is shown in Fig. 11, the construction of the fixation bracket 14 is similar to the construction of the fixation bracket 13 as described with reference to Fig. 4 and comprises engaging portions 141, a coupling portion 142, openings 143 as well as an elongate fixation opening 144. The fixation bracket 14 differs from the earlier described fixation bracket in that the openings 143 comprise a threaded inner surface.

Fig. 12 shows the attachment element 5 which differs from the attachment elements 4 in that the threaded sections 54 cover a smaller portion of the outer periphery of the legs 51.

Figs. 10 and 11 show the condition in which the fixation bracket 14 is in a locked condition and fixedly coupled to the vehicle body 8. As is shown in these figures, the threaded sections 54 of the attachment elements 5 are in engagement with the threaded inner surface of the openings 143. Thus, a rotation of the attachment elements 5 leads to movement of the fixation bracket 14 towards and away from the vehicle body 8. In the condition as shown in Fig. 10, the fixation bracket 14 is moved to the lower side of the attachment elements 5 thereby setting the attachment elements 5 into a condition in which the opening is not variable so that the fixation bracket 14 is fixed on the vehicle body 8. By this, a fix-point to which a load carrier foot can be mounted is provided.

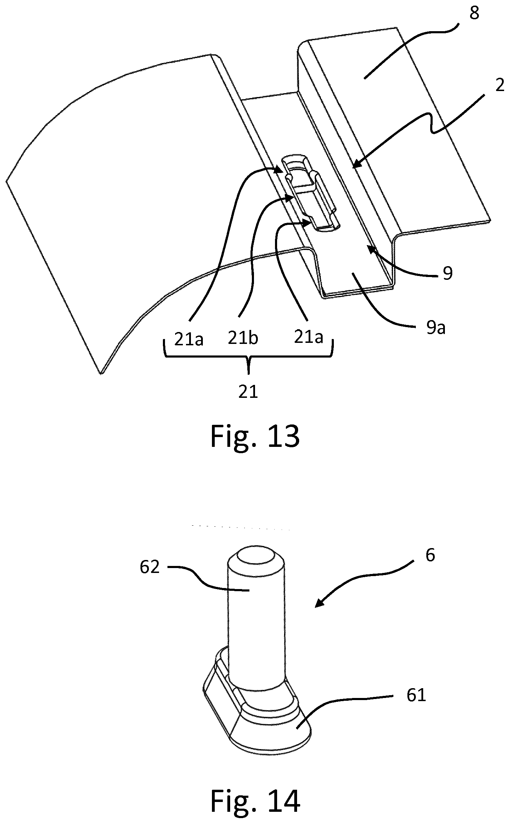

Fig. 13 shows a fixation device 2 according to a second embodiment of the present invention. The fixation device 2 comprises an intrusion in the form of an elongate groove 21 provided in the bottom portion 9a of a roof channel 9. The elongate groove comprises two engagement sections 21a and an insertion section 21b provided between the two engagement sections 21a. Each engagement section 21a comprises a dovetail groove into which a matingly formed engaging portion 61 of an attachment element 6 can be shiftedly inserted.

An attachment element 6 as used in connection with the second embodiment is shown in Fig. 14 and - in addition to the features as described above - comprises a threaded portion 62 in its upper portion.

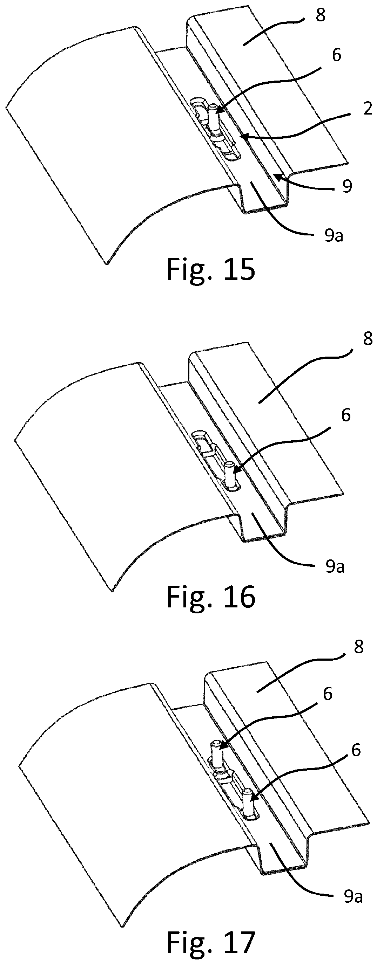

With reference to Figs. 16 to 19, the mounting steps of a fixation bracket on the vehicle body 8 using the fixation device according to the second embodiment of the present invention will be described. It is noted, that the fixation bracket used here corresponds to the fixation bracket 13 as described before with the difference that the openings are a little bit smaller.

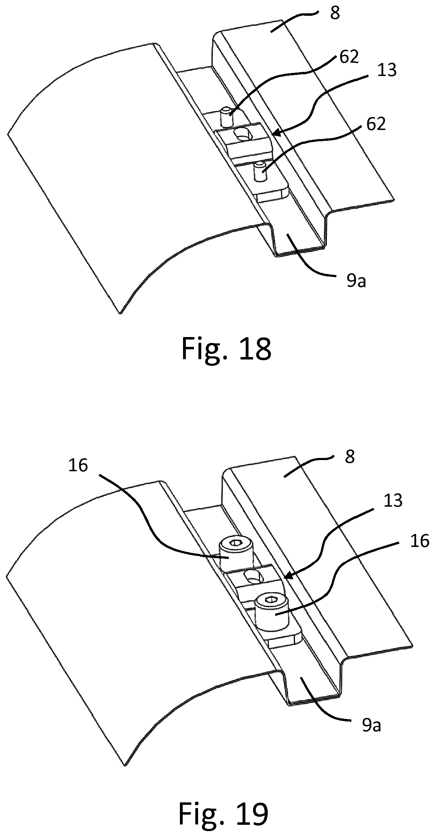

As a first step, the first attachment element 6 is inserted into the elongate groove, more precisely, into the insertion section 21b as shown in Fig. 15. Next, as shown in Fig. 16, the first attachment element 6 is moved into one of the engagement sections 21a thereby clearing the insertion section such that a further attachment element can be inserted into the insertion section. After that, a second attachment element 6 is inserted into the insertion section and moved into the other engagement section 21a as shown in Fig. 17. With both attachment elements 6 in place, the fixation bracket 13 is provided in the roof channel 9 such that the upper portions of the attachment elements are passed through the openings of the fixation bracket and protrude from the upper side of the fixation bracket as shown in Fig. 18. Finally, as is shown in Fig. 19, fixation nuts 16 are screwed on the threaded portions 62 of the attachment elements 6. In this arrangement, the fixation bracket 13 prevents the attachment elements 6 from coming off of the engagement sections and fixation nuts 16 securely fix the fixation bracket 13 on the vehicle. Accordingly, a fix-point to which a load carrier foot can be mounted is provided.

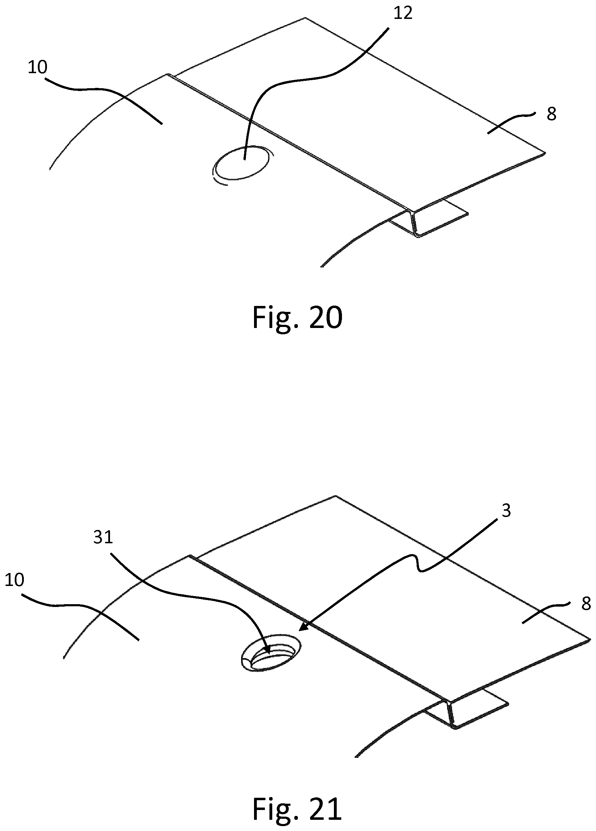

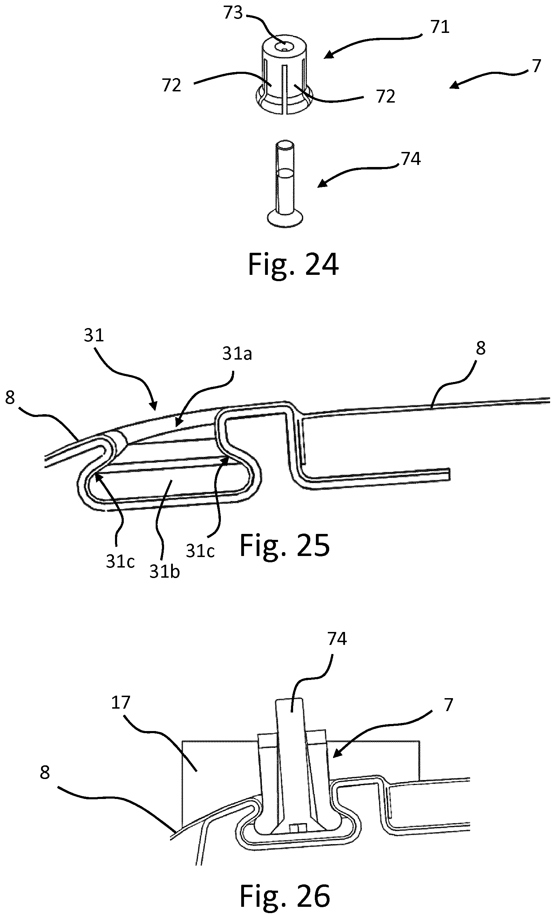

The construction and use of a fixation device 3 according to a third embodiment is described with reference to Figs. 20 to 26. The fixation device 3 according to this embodiment is a recess 31 formed in the outer shell of the vehicle and forming a threadless engagement member according to the invention. The structure of the recess 31 is shown in Fig. 25. The recess 31 comprises an insertion opening 31a and an engagement section 31b having a greater dimension than the insertion opening 31a. Furthermore, the recess 31 comprises reinforced sections 31c in order to withstand forces exerted on to the sidewalls of the recess 31 by an attachment element 7 as shown in Fig. 24. The attachment element 7 comprises an engagement element 71 having legs 72 being fixedly coupled to each other on one side, that is the upper side in Fig. 24, and having lower portions being movable being movable towards and away from each other. The engagement element 71 comprises a central bore 73 in its upper portion. The attachment element 7 further comprises a screw 74 which is inserted into the central bore 73 such that the screw head gets in contact with the lower portions of the legs 72. It is to be noted that the diameter of the screw head is larger than an inner diameter of the space formed between the legs 72 so that a movement of the screw head in the upward direction exerts a pushing force onto the legs 72 thereby effecting and movement of the lower portions of the legs away from each other. In other words, the lower portions of the legs move away from each other when the screw is tensioned. In order to tension the screw, a nut (not shown) is used which is applied from above. Fig. 26 shows the attachment element 7 in a mounted condition in which the screw 74 is tensioned and the lower portions of the legs 72 are moved away from each other. By this, an outer diameter of the engagement element 71 is increased thereby securely fixing the engagement element 71 in the recess 31.

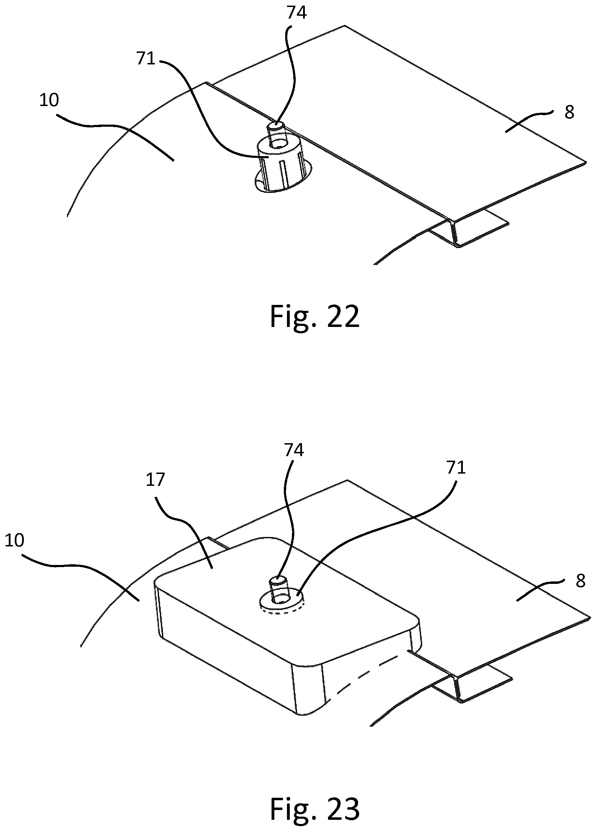

The mounting process will be described with reference to Figs. 22 to 23. As is shown in Fig. 20, a cap 12 covering the recess 31 needs to be removed in order to get access to the recess 31 as shown in Fig. 21. Next, as shown in Fig. 22, the attachment element 7 is inserted into the recess 31. After that, a foot pad 17 of a load carrier foot is provided on the outer shell 10 of the vehicle body 8 such that it surrounds the attachment element 7. As soon as the screw 74 is tensioned, the attachment element 7 is fixedly mounted in the recess 31 thereby providing a fix-point to which a load carrier foot can be mounted.

## Claims

1. Vehicle comprising a fixation device (1; 2; 3) adapted to fix a load carrier foot on said vehicle, said fixation device (1; 2; 3) comprising
one or more threadless engagement members (11; 21; 31) integrally formed with a vehicle body (8) of said vehicle,
each threadless engagement member (11; 21; 31)forming a threadless engaging element of a form fit coupling adapted to provide a form fit and releasable mating engagement with a mating member (4; 5; 6; 7) of said form fit coupling **characterized in that**
said one or more threadless engagement members (11; 21; 31) are formed by sheet metal clinching.

2. Vehicle according to one of the preceding claims, wherein at least one of said one or more threadless engagement members (11; 21; 31) comprises a protrusion or an intrusion integrally formed with said vehicle body (8), preferably by forming said protrusion or intrusion integrally in a material of said vehicle body (8).

3. Vehicle according to one of the preceding claims, wherein at least one of said one or more threadless engagement members (11) comprises a protrusion, wherein said protrusion comprises a recess, preferably a circumferential recess, adapted to the shape of said mating member (4; 5) adapted to provide an engagement with said mating member (4; 5) and/or wherein said protrusion comprises an undercut (11a) formed on an outer circumferential surface thereof.

4. Vehicle according to one of the preceding claims, wherein said one or more threadless engagement members (11; 21; 31) are formed by sheet metal clinching of two overlapping metal sheets.

5. Vehicle according to one of the preceding claims, wherein at least a portion of one of said one or more threadless engagement members (11) is formed in the shape of an inverse truncated cone.

6. Vehicle according to one of the preceding claims, further comprising a roof channel (9), wherein said fixation device (1) is arranged in said roof channel (9), preferably in the bottom (9a) of said roof channel (9).

7. Vehicle according to one of claims 1 to 5, said fixation device (1) being arranged on a body shell of said vehicle (8), wherein said vehicle preferably comprises a cover element (12) for covering said fixation device (3).

8. Vehicle according to one of claims 1 and 2, wherein at least one of said one or more threadless engagement members (21) comprises an intrusion, wherein said intrusion comprises an elongate groove having an insertion section (21b) and an engagement section (21a), said engagement section (21a) having a smaller dimension than said insertion section.

9. Vehicle according to one of claims 1 and 2, wherein at least one of said one or more threadless engagement members (31) comprises an intrusion, wherein said intrusion is a recess having an insertion opening (31a) and an engagement section (31b), said insertion opening (31a) having a smaller dimension than said engagement section (31b), wherein preferably said engagement section (31b) is reinforced and wherein preferably said intrusion comprises a mushroom-like shape.

10. Vehicle according to one of the preceding claims further comprising a fixation bracket (13; 14) adapted to fix a load carrier foot on said vehicle, said fixation bracket comprising
at least one engaging portion (131; 141) adapted to be engaged with an intrusion or a protrusion of a fixation device of said vehicle, and
a coupling portion (132; 142) adapted to receive a fixation member of a load carrier foot,
wherein said engaging portion (131; 141) comprises a mating member (4; 5; 6) of a form fit coupling.

11. Vehicle according to claim 10, wherein said engaging portion (141) comprises a locking mechanism, said locking mechanism comprising a rotatable member (5) movable between a first position for releasably receiving said protrusion and a second position in which said protrusion is locked to said rotatable member (5), wherein preferably said engaging portion (141) comprises a threaded bore (143) and said rotatable member (5) is threadedly inserted in said threaded bore (143), wherein said rotatable member (5) preferably comprises an opening for at least partly accommodating said protrusion, wherein said opening is adapted to be selectively set to a first condition in which said opening comprises a variable dimension and a second condition in which the dimension of said opening is substantially fixed.

12. Vehicle according to one of the preceding claims further comprising a load carrier foot of a load carrier, said load carrier foot comprising a fixation structure adapted to fix said load carrier foot on said vehicle, said fixation structure comprising
at least one engaging portion adapted to engage with a protrusion or intrusion of a fixation device of said vehicle.

13. Method for manufacturing a fixation device adapted to fix a load carrier foot on a vehicle comprising the step
integrally forming a threadless engagement member in a vehicle body by sheet metal clinching, preferably by sheet metal clinching of two overlapping metal sheets, said threadless engagement member forming a threadless engaging element of a form fit coupling adapted to provide a form fit and releasable mating engagement with a mating member of said form fit coupling.

## Patentansprüche

1. Fahrzeug, das eine Befestigungsvorrichtung (1; 2; 3) umfasst, die so ausgelegt ist, dass sie einen Lastträgerfuß an dem Fahrzeug befestigt, wobei die Befestigungsvorrichtung (1; 2; 3) Folgendes umfasst:
ein oder mehrere gewindelose Eingriffsglieder (11; 21; 31), die einteilig mit einer Fahrzeugkarosserie (8) des Fahrzeugs ausgebildet sind,
wobei jedes gewindelose Eingriffsglied (11; 21; 31) ein gewindeloses Eingriffselement einer formschlüssigen Verbindung bildet, das so ausgelegt ist, dass es für einen Formschluss und eine lösbare ineinandergreifende Verbindung mit einem Gegenelement (4; 5; 6; 7) der formschlüssigen Verbindung sorgt,
**dadurch gekennzeichnet, dass**
das eine oder die mehreren gewindelosen Eingriffsglieder (11; 21; 31) mittels Durchsetzfügen von Blech ausgebildet sind.

2. Fahrzeug nach einem der vorhergehenden Ansprüche, wobei zumindest eins von dem einen oder den mehreren gewindelosen Eingriffsgliedern (11; 21; 31) eine Vorwölbung oder eine Einwölbung umfasst, die einteilig mit der Fahrzeugkarosserie (8) ausgebildet ist, vorzugsweise durch einteiliges Ausbilden der Vorwölbung oder Einwölbung in einem Material der Fahrzeugkarosserie (8).

3. Fahrzeug nach einem der vorhergehenden Ansprüche, wobei zumindest eins von dem einen oder den mehreren gewindelosen Eingriffsgliedern (11) eine Vorwölbung umfasst, wobei die Vorwölbung eine Aussparung, vorzugsweise eine Umfangsaussparung, umfasst, die an die Form des Gegenelements (4; 5) angepasst und so ausgelegt ist, dass sie mit dem Gegenelement (4; 5) für Eingriff sorgt und/oder wobei die Vorwölbung einen Hinterschnitt (11a) umfasst, der an einer Außenumfangsfläche davon ausgebildet ist.

4. Fahrzeug nach einem der vorhergehenden Ansprüche, wobei das eine oder die mehreren gewindelosen Eingriffsglieder (11; 21; 31) mittels Durchsetzfügen von zwei sich überdeckenden Blechen ausgebildet sind.

5. Fahrzeug nach einem der vorhergehenden Ansprüche, wobei zumindest ein Abschnitt von einem des einen oder der mehreren gewindelosen Eingriffsglieder (11) in der Form eines umgekehrten Kegelstumpfes geformt ist.

6. Fahrzeug nach einem der vorhergehenden Ansprüche, ferner umfassend einen Dachkanal (9), wobei die Befestigungsvorrichtung (1) in dem Dachkanal (9), vorzugsweise im Boden (9a) des Dachkanals (9) angeordnet ist.

7. Fahrzeug nach einem der Ansprüche 1 bis 5, wobei die Befestigungsvorrichtung (1) an einer Karosseriehülle des Fahrzeugs (8) angeordnet ist, wobei das Fahrzeug vorzugsweise ein Abdeckelement (12) zum Abdecken der Befestigungsvorrichtung (3) umfasst.

8. Fahrzeug nach Anspruch 1 oder 2, wobei zumindest eins von dem einen oder den mehreren gewindelosen Eingriffsgliedern (21) eine Einwölbung umfasst, wobei die Einwölbung eine Längsnut mit einem Einsetzabschnitt (21b) und einem Eingriffsabschnitt (21a) umfasst, wobei der Eingriffsabschnitt (21a) eine kleinere Abmessung als der Einsetzabschnitt aufweist.

9. Fahrzeug nach Anspruch 1 oder 2, wobei zumindest eins von dem einen oder den mehreren gewindelosen Eingriffsgliedern (31) eine Einwölbung umfasst, wobei die Einwölbung eine Aussparung mit einer Einsetzöffnung (31a) und einem Eingriffsabschnitt (31b) ist, wobei die Einsetzöffnung (31a) eine kleinere Abmessung als der Eingriffsabschnitt (31b) aufweist, wobei vorzugsweise der Eingriffsabschnitt (31b) verstärkt ist und wobei vorzugsweise die Einwölbung eine pilzartige Form aufweist.

10. Fahrzeug nach einem der vorhergehenden Ansprüche, das ferner eine Befestigungshalterung (13; 14) umfasst, die so ausgelegt ist, dass sie einen Lastträgerfuß an dem Fahrzeug befestigt, wobei die Befestigungshalterung Folgendes umfasst:
mindestens einen Eingriffsabschnitt (131; 141), der so ausgelegt ist, dass er mit einer Einwölbung oder Vorwölbung einer Befestigungsvorrichtung des Fahrzeugs in Eingriff gebracht wird, und
einen Verbindungsabschnitt (132; 142), der so ausgelegt ist, dass er ein Befestigungselement eines Lastträgerfußes aufnimmt,
wobei der Eingriffsabschnitt (131; 141) ein Gegenelement (4; 5; 6) einer formschlüssigen Verbindung umfasst.

11. Fahrzeug nach Anspruch 10, wobei der Eingriffsabschnitt (141) einen Arretiermechanismus umfasst, wobei der Arretiermechanismus ein drehbares Glied (5) umfasst, das zwischen einer ersten Stellung zum lösbaren Aufnehmen der Vorwölbung und einer zweiten Stellung, in der die Vorwölbung an dem drehbaren Glied (5) arretiert ist, beweglich ist, wobei vorzugsweise der Eingriffsabschnitt (141) eine Gewindebohrung (143) umfasst und das drehbare Glied (5) in die Gewindebohrung (143) eingeschraubt ist, wobei das drehbare Glied (5) vorzugsweise eine Öffnung zum zumindest teilweisen Aufnehmen der Vorwölbung umfasst, wobei die Öffnung so ausgelegt ist, dass sie gezielt auf einen ersten Zustand eingestellt wird, in dem die Öffnung eine veränderliche Abmessung umfasst, und einen zweiten Zustand, in dem die Abmessung der Öffnung im Wesentlichen fest ist.

12. Fahrzeug nach einem der vorhergehenden Ansprüche, das ferner einen Lastträgerfuß eines Lastträgers umfasst, wobei der Lastträgerfuß eine Befestigungsstruktur umfasst, die so ausgelegt ist, dass sie den Lastträgerfuß an dem Fahrzeug befestigt, wobei die Befestigungsstruktur Folgendes umfasst:
mindestens einen Eingriffsabschnitt, der so ausgelegt ist, dass er mit einer Vorwölbung oder Einwölbung einer Befestigungsvorrichtung des Fahrzeugs in Eingriff gelangt.

13. Verfahren zur Herstellung einer Befestigungsvorrichtung, die so ausgelegt ist, dass sie einen Lastträgerfuß an einem Fahrzeug befestigt, das folgenden Schritt umfasst:
einteiliges Ausbilden eines gewindelosen Eingriffsglieds in einer Fahrzeugkarosserie mittels Durchsetzfügen von Blech, vorzugsweise mittels Durchsetzfügen von zwei sich überdeckenden Blechen, wobei das gewindelose Eingriffsglied ein gewindeloses Eingriffselement einer formschlüssigen Verbindung bildet, das so ausgelegt ist, dass es für einen Formschluss und eine lösbare ineinandergreifende Verbindung mit einem Gegenelement der formschlüssigen Verbindung sorgt.

## Revendications

1. Véhicule comprenant un dispositif de fixation (1 ; 2 ; 3) adapté pour fixer un pied de support de charge sur ledit véhicule, ledit dispositif de fixation (1 ; 2 ; 3) comprenant
un ou plusieurs organes de prise non filetés (11 ; 21 ; 31) formés d'un seul tenant avec une carrosserie de véhicule (8) dudit véhicule,
chaque organe de prise non fileté (11 ; 21 ; 31) formant un élément de prise non fileté d'un assemblage par complémentarité de forme adapté pour fournir une mise en prise conjuguée par complémentarité de forme et libérable avec un organe conjugué (4 ; 5 ; 6 ; 7) dudit assemblage par complémentarité de forme **caractérisé en ce que**
lesdits un ou plusieurs organes de prise non filetés (11 ; 21 ; 31) sont formés par clinchage de tôle métallique.

2. Véhicule selon l'une des revendications précédentes, dans lequel au moins un desdits un ou plusieurs organes de prise non filetés (11 ; 21 ; 31) comprend une protubérance ou un enfoncement formé(e) d'un seul tenant avec ladite carrosserie de véhicule (8), de préférence en formant ladite protubérance ou ledit enfoncement d'un seul tenant dans un matériau de ladite carrosserie de véhicule (8).

3. Véhicule selon l'une des revendications précédentes, dans lequel au moins un desdits un ou plusieurs organes de prise non filetés (11) comprend une protubérance, ladite protubérance comprenant un évidement, de préférence un évidement circonférentiel, adapté à la forme dudit organe conjugué (4 ; 5), adapté pour fournir une mise en prise avec ledit organe conjugué (4 ; 5) et/ou ladite protubérance comprenant une contre-dépouille (11a) formée sur une surface circonférentielle extérieure de celle-ci.

4. Véhicule selon l'une des revendications précédentes, dans lequel lesdits un ou plusieurs organes de prise non filetés (11 ; 21 ; 31) sont formés par clinchage de tôle métallique de deux tôles métalliques se chevauchant.

5. Véhicule selon l'une des revendications précédentes, dans lequel au moins une partie de l'un desdits un ou plusieurs organes de prise non filetés (11) est formée sous la forme d'un cône tronqué renversé.

6. Véhicule selon l'une des revendications précédentes, comprenant en outre une gouttière de toit (9), ledit dispositif de fixation (1) étant agencé dans ladite gouttière de toit (9), de préférence dans le fond (9a) de ladite gouttière de toit (9).

7. Véhicule selon l'une des revendications 1 à 5, ledit dispositif de fixation (1) étant agencé sur une caisse de carrosserie dudit véhicule (8), ledit véhicule comprenant de préférence un élément de recouvrement (12) pour recouvrir ledit dispositif de fixation (3).

8. Véhicule selon l'une des revendications 1 et 2, dans lequel au moins un desdits un ou plusieurs organes de prise non filetés (21) comprend un enfoncement, ledit enfoncement comprenant une rainure allongée présentant une section d'insertion (21b) et une section de prise (21a), ladite section de prise (21a) présentant une dimension inférieure à ladite section d'insertion.

9. Véhicule selon l'une des revendications 1 et 2, dans lequel au moins un desdits un ou plusieurs organes de prise non filetés (31) comprend un enfoncement, ledit enfoncement étant un évidement comportant une ouverture d'insertion (31a) et une section de prise (31b), ladite ouverture d'insertion (31a) présentant une dimension inférieure à ladite section de prise (31b), ladite section de prise (31b) étant de préférence renforcée et ledit enfoncement présentant de préférence une forme semblable à un champignon.

10. Véhicule selon l'une des revendications précédentes, comprenant en outre un support de fixation (13 ; 14) adapté pour fixer un pied de support de charge sur ledit véhicule, ledit support de fixation comprenant au moins une partie de prise (131 ; 141) adaptée pour être en prise avec un enfoncement ou une protubérance d'un dispositif de fixation dudit véhicule, et une partie d'assemblage (132 ; 142) adaptée pour recevoir un organe de fixation d'un pied de support de charge,
ladite partie de prise (131 ; 141) comprenant un organe conjugué (4 ; 5 ; 6) d'un assemblage par complémentarité de forme.

11. Véhicule selon la revendication 10, dans lequel ladite partie de prise (141) comprend un mécanisme de verrouillage, ledit mécanisme de verrouillage comprenant un organe rotatif (5) mobile entre une première position pour recevoir de manière libérable ladite protubérance et une seconde position dans laquelle ladite protubérance est verrouillée sur ledit organe rotatif (5),
ladite partie de prise (141) comprenant de préférence un trou fileté (143) et ledit organe rotatif (5) étant inséré par vissage dans ledit trou fileté (143), ledit organe rotatif (5) comprenant de préférence une ouverture pour loger au moins partiellement ladite protubérance, ladite ouverture étant adaptée pour être réglée de manière sélective sur un premier état dans lequel ladite ouverture comprend une dimension variable et un second état dans lequel la dimension de ladite ouverture est essentiellement fixe.

12. Véhicule selon l'une des revendications précédentes, comprenant en outre un pied de support de charge d'un support de charge, ledit pied de support de charge comprenant une structure de fixation adaptée pour fixer ledit pied de support de charge sur ledit véhicule, ladite structure de fixation comprenant au moins une partie de prise adaptée pour venir en prise avec une protubérance ou un enfoncement d'un dispositif de fixation dudit véhicule.

13. Procédé de fabrication d'un dispositif de fixation, adapté pour fixer un pied de support de charge sur un véhicule comprenant l'étape consistant à former d'un seul tenant un organe de prise non fileté dans une carrosserie de véhicule par clinchage de tôle métallique, de préférence par clinchage de tôle métallique de deux tôles métalliques se chevauchant, ledit organe de prise non fileté formant un élément de prise non fileté d'un assemblage par complémentarité de forme adapté pour fournir une mise en prise conjuguée par complémentarité de forme et libérable avec un organe conjugué dudit assemblage par complémentarité de forme.
